# FASCICULE DE BREVET EUROPEEN

(11) **EP 2 366 509 B1**
(45) Date de publication et mention de la délivrance du brevet: **03.07.2013**
(21) Numéro de dépôt: 11164330.0
(22) Date de dépôt: 20.08.2009
(51) Int. Cl.: B26D 1/36, B26D 1/43, A47J 43/25

(54) **Appareil électroménager de découpe d'aliments en continu avec montage d'outil simplifié**
Küchengerät zum Schneiden von Lebensmitteln mit vereinfachtem Einsetzen des Arbeitsgeräts
Household cutting appliance with simplified mounting of the tool

(30) Priorité: 02.09.2008 FR 0855886; 02.09.2008 FR 0855888; 25.05.2009 FR 0902501
(43) Date de publication de la demande: 21.09.2011
(62) Demande divisionnaire de: 09356052.2
(73) Titulaire: Seb S.A., 69130 Ecully (FR)
(72) Inventeur: Rouyer, Philippe, 65290, Juillan (FR); Lafond, Jean-Marie, 65420, Ibos (FR); Suberbie, Nicolas, 65290, Juillan (FR)
(74) Mandataire: Cémeli, Eric Philippe Laurent

(56) Documents cités:
- FR-A1- 2 897 522
- US-A- 939 951

## Description

La présente invention concerne le domaine technique des appareils électroménagers de découpe d'aliments en continu. Les appareils du type précité comportent un outil de travail agencé entre un conduit d'introduction des aliments et une sortie d'évacuation des aliments découpés.

La présente invention concerne plus particulièrement les appareils comportant un outil de travail rotatif de type tronconique ou cylindrique.

Les documents WO 2004/012915 et FR 2897522 divulguent un appareil électroménager de découpe d'aliments comportant un outil de travail de type cylindrique agencé selon un axe de rotation orienté vers le bas en direction de la sortie d'évacuation des aliments découpés. Cette disposition favorise l'évacuation des aliments découpés. Toutefois, l'outil de travail rotatif est maintenu en place dans un boîtier d'accessoire par une pièce montée sur la sortie d'évacuation du boîtier d'accessoire.

Un objet de la présente invention est de simplifier la construction d'un appareil électroménager de découpe d'aliments du type précité.

Un autre objet de la présente invention est de simplifier l'utilisation d'un appareil électroménager de découpe d'aliments du type précité.

Ces objets sont atteints avec un appareil électroménager de découpe d'aliments comprenant une base motorisée et un accessoire de travail solidaire de la base motorisée, l'accessoire de travail comportant un boîtier d'accessoire définissant un logement présentant une ouverture frontale, un organe entraîneur monté dans le logement selon un axe de rotation incliné vers le bas en direction de l'ouverture frontale, et un outil de travail rotatif prévu pour venir en prise avec l'organe entraîneur lorsque ledit outil de travail rotatif est mis en place dans le logement, le boîtier d'accessoire présentant un conduit débouchant dans le logement en regard d'au moins un organe de coupe de l'outil de travail rotatif, du fait que l'organe entraîneur forme au moins un crochet orienté vers l'avant par rapport au sens de rotation de l'organe entraîneur, que l'organe entraîneur comporte au moins un bras présentant une surface postérieure d'appui inclinée vers l'avant en direction de l'ouverture frontale par rapport au sens de rotation de l'organe entraîneur, la surface postérieure d'appui étant prévue pour venir en contact avec une paroi d'appui de désengagement de l'outil de travail rotatif, que le boîtier d'accessoire est assemblé par rotation avec la base motorisée, et que le sens de rotation de l'outil de travail rotatif par rapport à l'organe entraîneur pour engager l'outil de travail rotatif avec le crochet correspond au sens de rotation du boîtier d'accessoire par rapport à la base motorisée pour solidariser le boîtier d'accessoire avec la base motorisée. Ces dispositions permettent de faciliter le retrait de l'outil de travail rotatif du boîtier d'accessoire lorsqu'un morceau d'aliment engagé dans le conduit entrave la rotation de l'outil de travail rotatif par rapport au boîtier d'accessoire. L'appareil électroménager de préparation d'aliments proposé présente une construction et une utilisation particulièrement simples.

Avantageusement alors, la surface postérieure d'appui appartient au crochet. Cette disposition permet de simplifier la construction de l'organe entraîneur.

Avantageusement encore, le boîtier d'accessoire est assemblé par baïonnette avec la base motorisée. L'utilisateur peut ainsi aisement séparer le boîtier d'accessoire et l'outil de travail rotatif de la base motorisée en vue de leur nettoyage.

Avantageusement encore, l'outil de travail rotatif est tronconique. Cette disposition favorise aussi l'éjection des aliments coupés par l'outil de travail rotatif.

Avantageusement encore, ledit organe de coupe est solidaire d'un corps réalisé en matière plastique. Cette disposition permet de faciliter la réalisation de l'outil de travail rotatif en offrant une plus grande liberté de formes. Cette disposition permet aussi de faciliter l'identification d'outils de travail rotatifs différents en utilisant des couleurs différentes pour le corps desdits outils de travail rotatifs.

Avantageusement alors, le corps présente un organe d'entraînement prévu pour venir en prise avec l'organe entraîneur. Cette disposition permet de réaliser plus aisément des parois de différentes épaisseurs au niveau de l'organe d'entraînement.

Selon une forme de réalisation avantageuse, l'organe entraîneur forme entre deux et huit crochets. Cette disposition permet un bon équilibrage de l'entraînement tout en facilitant le montage de l'outil de travail rotatif. Selon une forme de réalisation préférée, l'organe entraîneur forme entre trois et six crochets.

De préférence, le nombre de branches de l'organe d'entraînement correspond au nombre de bras de l'organe entraîneur.

L'invention sera mieux comprise à l'étude d'un exemple de réalisation, pris à titre nullement limitatif, illustré dans les figures annexées, dans lesquelles :
- la figure 1 est une vue en perspective et en éclaté d'un appareil de préparation culinaire selon l'invention,
- la figure 2 est une vue en coupe longitudinale de l'appareil illustré sur la figure 1,
- la figure 3 est une vue de côté d'un boîtier d'accessoire et d'un poussoir de l'appareil illustré sur les figures 1 et 2,
- la figure 4 est une vue en perspective du boîtier d'accessoire et du poussoir illustrés sur la figure 3, montrant un organe entraîneur agencé dans un logement du boîtier d'accessoire,
- la figure 5 est une vue en perspective de organe entraîneur visible sur la figure 4,
- la figure 6 est une vue de coté d'un outil de travail rotatif de l'appareil illustré sur les figures 1 et 2,
- la figure 7 est une vue de face de l'outil de travail rotatif illustré sur la figure 6,
- la figure 8 est une vue en perspective du boîtier d'accessoire illustré sur les figures 3 et 4 recevant l'outil de travail rotatif illustré sur les figures 6 et 7,
- la figure 9 est une vue partielle en coupe agrandie de la figure 2,
- la figure 10 est une vue partielle en perspective montrant le montage de l'outil de travail rotatif illustré sur les figures 6 et 7 sur l'organe entraîneur illustré sur la figure 5,
- la figure 11 est une vue partielle en perspective montrant l'entraînement de l'outil de travail rotatif illustré sur les figures 6 et 7 par l'organe entraîneur illustré sur la figure 5.

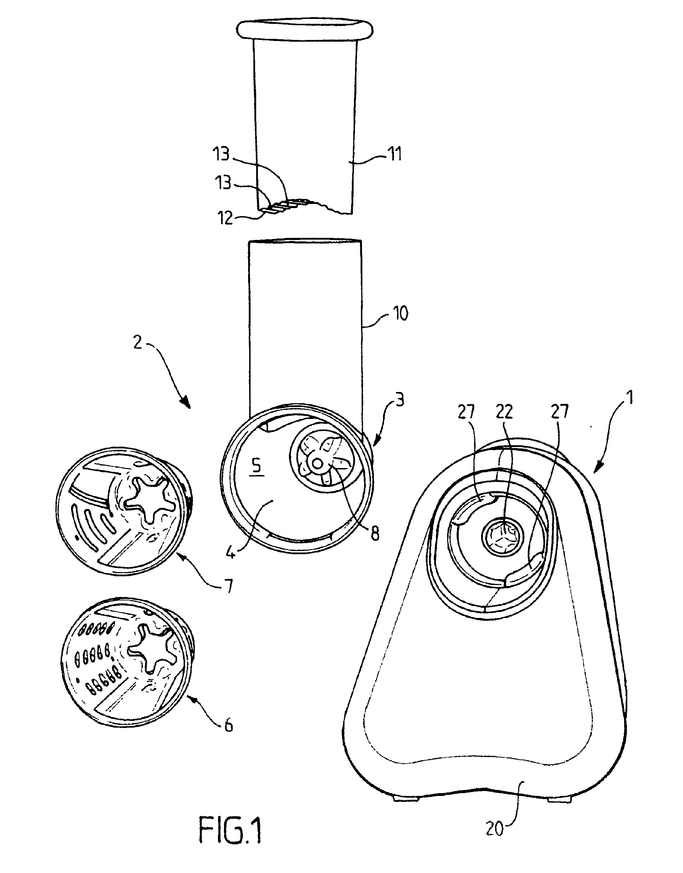

L'appareil électroménager de découpe d'aliments illustré sur les figures 1 à 11 comprend une base motorisée 1 et un accessoire de travail 2.

Tel que visible sur la figure 1, l'accessoire de travail 2 comporte un boîtier d'accessoire 3 définissant un logement 4 présentant une ouverture frontale 5. L'accessoire de travail 2 comporte un outil de travail rotatif 6, et si désiré au moins un autre outil de travail rotatif 7 interchangeable avec l'outil de travail rotatif 6.

L'accessoire de travail 2 comporte un organe entraîneur 8 monté dans le logement 4. L'organe entraîneur 8 est monté dans le logement 4 en regard de l'ouverture frontale 5. L'ouverture frontale 5 est prévue pour l'introduction de l'outil de travail rotatif 6. L'outil de travail rotatif 6 est prévu pour venir en prise avec l'organe entraîneur 8 lorsque ledit outil de travail rotatif 6 est mis en place dans le logement 4.

Le boîtier d'accessoire 3 présente un conduit 10 débouchant dans le logement 4. Un poussoir 11 peut être inséré dans le conduit 10. Le poussoir 11 présente une extrémité 12 pourvue de protubérances 13 prévues pour maintenir les aliments introduits dans le conduit 10. De préférence, les protubérances 13 s'étendent selon une direction transversale au mouvement de l'outil de travail rotatif 6 entraîné en rotation dans le logement 4.

Selon la forme de réalisation préférée illustrée aux figures, l'outil de travail rotatif 6 est tronconique. L'angle d'ouverture de l'outil de travail rotatif 6 est par exemple de 24°.

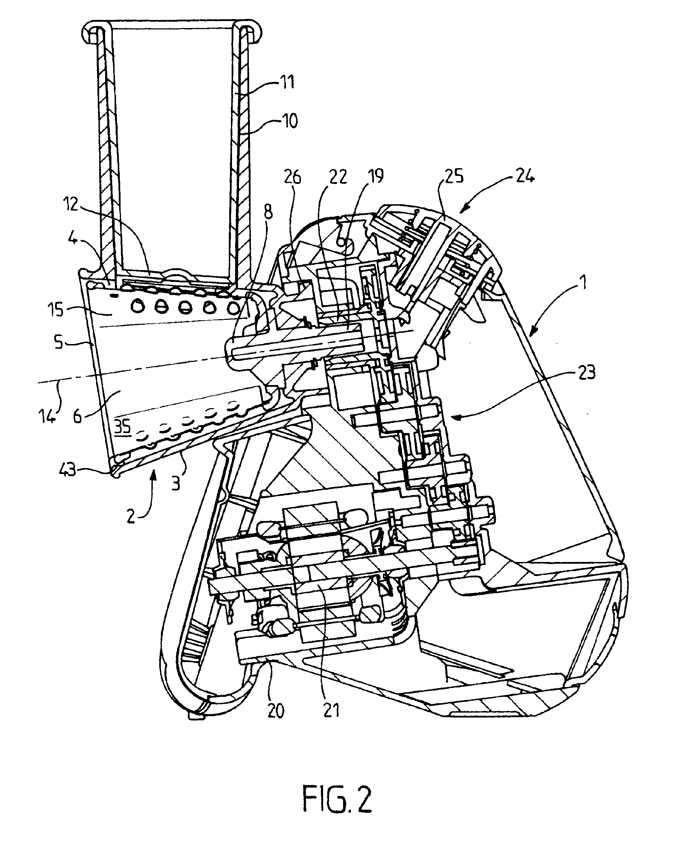

Tel que mieux visible sur la figure 2, l'organe entraîneur 8 est monté dans le logement 4 selon un axe de rotation 14 incliné vers le bas en direction de l'ouverture frontale 5. Le conduit 10 débouche dans le logement 4 en regard d'au moins un organe de coupe 15 de l'outil de travail rotatif 6.

Tel que montré sur la figure 2, l'accessoire de travail 2 est solidaire de la base motorisée 1. L'axe de rotation 14 présente une inclinaison de 8° vers le bas par rapport au plan d'appui de la base motorisée 1.

La base motorisée 1 comporte un boîtier 20 logeant un moteur électrique 21. Le moteur électrique 21 est relié à une sortie d'entraînement 22 par l'intermédiaire d'une transmission à engrenages 23. Si désiré, un autre type de transmission peut être utilisé. Le moteur électrique 21 est associé à des moyens de commande 24 tels que par exemple un bouton poussoir 25.

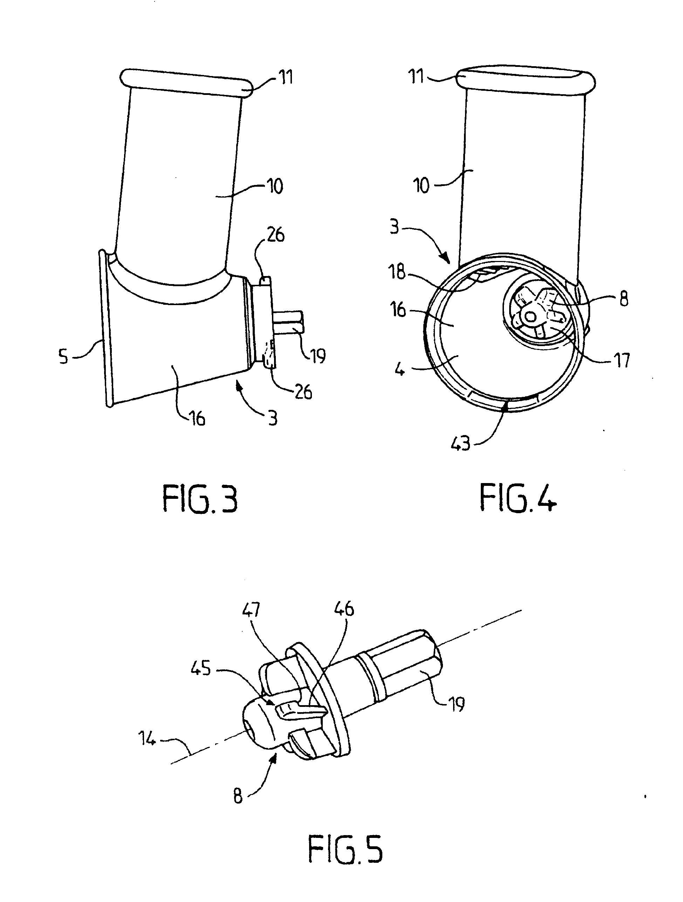

Tel que montré sur les figures 3 et 4, le logement 4 est défini par une paroi tronconique 16. L'organe entraîneur 8 est monté dans une paroi de fond 17 prolongée par la paroi tronconique 16. Le conduit 10 débouche dans une ouverture supérieure 18 de la paroi tronconique 16.

Tel que montré sur les figures 3 et 5, l'organe entraîneur 8 est relié à un axe d'entraînement 19. L'axe d'entraînement 19 traverse la paroi de fond 17.

Le boîtier d'accessoire 3 est assemblé par rotation avec la base motorisée 1. Plus particulièrement, le boîtier d'accessoire 3 comporte des organes d'accrochage 26 agencés à l'opposé de l'ouverture frontale 5. Les organes d'accrochage 26 sont prévus pour venir en prise avec des organes de retenue 27 ménagés sur la base motorisée 1, visibles sur la figure 1. Les organes de retenue 27 sont agencés autour de la sortie d'entraînement 22. Ainsi le boîtier d'accessoire 3 est assemblé par baïonnette avec la base motorisée 1. Tel que représenté sur la figure 2, la sortie d'entraînement 22 vient en prise avec l'axe d'entraînement 19 relié à l'organe entraîneur 8. Ainsi l'organe entraîneur 8 est entraîné en rotation par le moteur électrique 21.

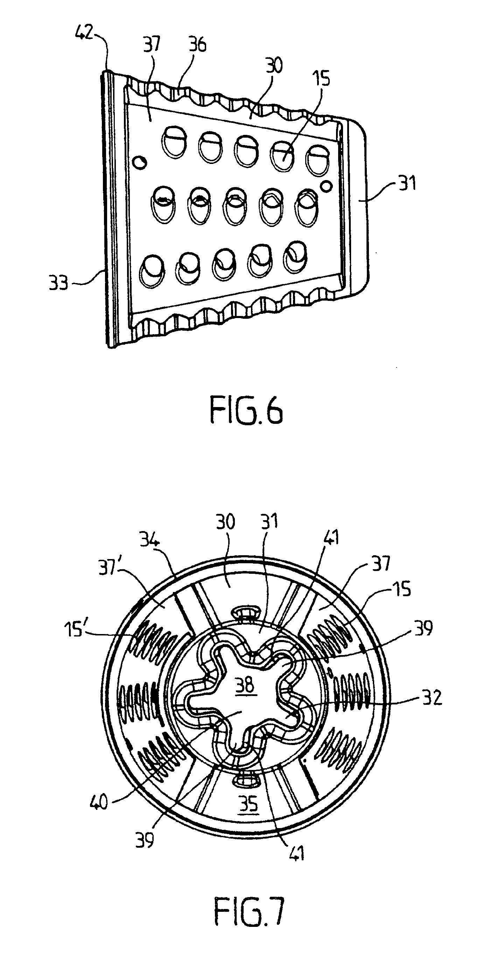

Tel que représenté sur les figures 6 et 7, l'outil de travail rotatif 6 comporte une paroi latérale circonférentielle 30 reliée à une paroi arrière 31. L'outil de travail rotatif 6 comporte un organe d'entraînement 32 prévu pour venir en prise avec l'organe entraîneur 8. L'organe d'entraînement 32 est ménagé dans la paroi arrière 31. Ainsi l'outil de travail rotatif 6 présente une extrémité ouverte 33 agencée à l'opposé de l'organe d'entraînement 32.

La paroi latérale circonférentielle 30 présente une extrémité libre 34 définissant une ouverture de déversement 35. Tel que visible sur la figure 2, l'ouverture de déversement 35 de l'outil de travail rotatif 6 est agencée à l'opposé de la paroi de fond 17 du logement 4.

Tel que représenté sur les figures 6 et 7, l'outil de travail rotatif 6 comprend un corps 36 réalisé en matière plastique. Le corps 36 forme une partie de la paroi latérale circonférentielle 30. Le corps 36 présente une ouverture latérale 37 au travers de laquelle s'étend l'organe de coupe 15. L'organe de coupe 15 est agencé sur la paroi latérale circonférencielle 30. L'organe de coupe 15 est solidaire du corps 36 réalisé en matière plastique. Le corps 36 présente une autre ouverture latérale 37' au travers de laquelle s'étend un autre organe de coupe 15'. L'autre organe de coupe 15' est agencé sur la paroi latérale circonférencielle 30.

L'organe de coupe 15 et l'autre organe de coupe 15' sont par exemple obtenus à partir d'une tôle métallique. Le corps 36 est par exemple surmoulé sur l'organe de coupe 15 et sur l'autre organe de coupe 15'. La paroi arrière 31 appartient au corps 36.

Tel que montré sur la figure 7, l'organe d'entraînement 32 est formé par une ouverture 38 ménagée dans la paroi arrière 31. L'ouverture 38 présente une forme en étoile. L'ouverture 38 comporte des branches 39 s'étendant radialement à partir d'une partie centrale 40. Toutefois, les branches 39 présentent des parois internes 41 définissant une portion d'hélice, de manière à assurer une meilleure prise avec l'organe entraîneur 8. A cet effet les parois internes 41 sont inclinées par rapport à l'axe géométrique de l'outil de travail 6. L'outil de travail rotatif 6 mis en place dans le logement 4 est susceptible de venir en appui à l'intérieur du logement 4. A cet effet, l'outil de travail rotatif 6 comporte une collerette 42.

Tel que visible sur la figure 6, la collerette 42 est issue du corps 36. La collerette 42 définit l'extrémité ouverte 33 de l'outil de travail rotatif 6. L'organe de coupe 15 est agencé entre la collerette 42 et l'organe d'entraînement 32.

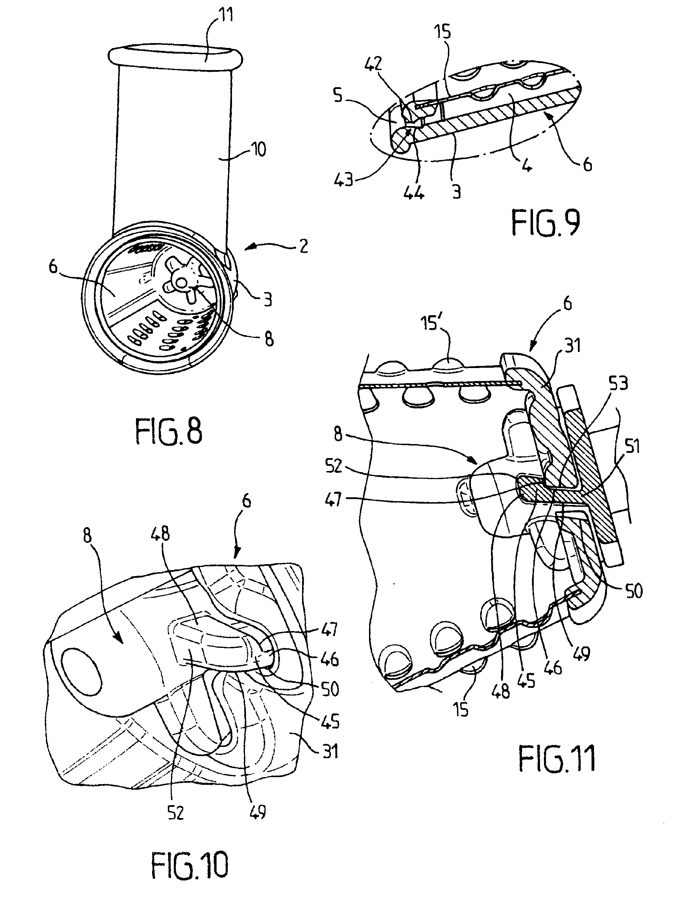

La figure 8 illustre l'outil de travail rotatif 6 en place dans le boîtier d'accessoire 3.

Alors, tel que visible sur les figures 2 et 9, l'outil de travail rotatif 6 monté sur l'organe entraîneur 8 est susceptible de venir en appui dans une partie inférieure du logement 4 contre une butée de retenue 43.

Plus particulièrement, la collerette 42 est prévue pour venir en appui contre la butée de retenue 43. Selon le mode de réalisation préféré illustré sur les figures, la butée de retenue 43 est formée par une paroi inférieure 44 du logement 4 relevée vers le haut en direction de l'ouverture frontale 5.

Tel que visible sur les figures 10 et 11, l'organe entraîneur 8 forme au moins un crochet 45 orienté vers l'avant par rapport au sens de rotation de l'organe entraîneur 8. Le crochet 45 présente une surface d'entraînement 46 prolongée du côté de l'ouverture frontale 5 par une surface de retenue 47.

La surface d'entraînement 46 est agencée sur une face antérieure du crochet 45 par rapport au sens de rotation de l'organe entraîneur 8. Ainsi la face d'entraînement antérieure 46 peut venir en appui contre l'organe d'entraînement 32 lorsque l'organe entraîneur 8 entraîne l'outil de travail rotatif 6 en rotation. Tel que visible sur la figure 5, la surface d'entraînement 46 présente une inclinaison inférieure à 45° par rapport à l'axe de rotation 14.

La surface de retenue 47 est agencée transversalement par rapport à l'axe de rotation 14 de l'organe entraîneur 8. La surface de retenue 47 est agencée entre la face d'entraînement antérieure 46 et l'ouverture frontale. Ainsi la surface de retenue 47 peut retenir la face interne de la paroi arrière 31 de l'outil de travail rotatif 6 lorsque l'outil de travail rotatif 6 est monté sur l'organe entraîneur.

De préférence, le sens de rotation de l'outil de travail rotatif 6 par rapport à l'organe entraîneur 8 pour engager l'outil de travail rotatif 6 avec le crochet 45 correspond au sens de rotation du boîtier d'accessoire 3 par rapport à la base motorisée 1 pour solidariser le boîtier d'accessoire 3 avec la base motorisée 1.

Avantageusement, l'organe entraîneur 8 comporte au moins un bras 48 présentant une surface postérieure d'appui 49 inclinée vers l'avant en direction de l'ouverture frontale 5 par rapport au sens de rotation de l'organe entraîneur 8, la surface postérieure d'appui 49 étant prévue pour venir en contact avec une paroi d'appui de désengagement 50 de l'outil de travail rotatif 6.

Plus particulièrement, le crochet 45 est ménagé dans le bras 48. La surface postérieure d'appui 49 appartient au crochet 45. La surface postérieure d'appui 49 s'étend entre une base 51 et un sommet 52 du crochet 45.

Avantageusement, la surface d'entraînement 46 est inclinée vers l'avant par rapport au sens de rotation de l'organe entraîneur 8, et l'outil de travail rotatif 6 présente une paroi d'entraînement 53 inclinée en correspondance.

Tel que représenté sur les figures 1, 4, 5 et 8, l'organe entraîneur 8 forme cinq crochets 45. L'organe entraîneur 8 présente également cinq bras 48. L'organe d'entraînement 32 présente cinq branches 49.

Avantageusement, l'organe entraîneur 8 forme entre deux et huit crochets 45, et de préférence entre trois et six crochets 45.

Avantageusement, l'organe d'entraînement 32 présente entre deux et huit branches 49, et de préférence entre trois et six branches 49.

De préférence, le nombre de bras 48 est égal au nombre de branches 49.

La paroi d'appui de désengagement 50 et la paroi d'entraînement 53 appartiennent aux parois internes 41 des branches 39 de l'organe d'entraînement 32.

L'appareil selon l'invention fonctionne et s'utilise de la manière suivante.

L'utilisateur monte le boîtier d'accessoire 3 sur la base motorisée 1 de manière à engager les organes d'accrochage 26 avec les organes de retenue 27. Lorsque le boîtier d'accessoire 3 est solidaire de la base motorisée 1, l'utilisateur introduit l'outil de travail rotatif 6 dans le logement 4. Les sommets 52 des crochets 45 sortent alors de l'ouverture 38, tel que représenté sur la figure 10. La collerette 42 de l'outil de travail rotatif 6 peut venir en appui contre la butée de retenue 43 formée par sur la paroi inférieure 44 du logement 4 relevée vers le haut en direction de l'ouverture frontale 5. Ainsi l'outil de travail rotatif 6 est retenu dans le boîtier d'accessoire 3. La mise en place de l'outil de travail rotatif 6 dans le logement 4 est facilitée par l'absence de pièce de retenue additionnelle.

L'utilisateur peut mettre en marche l'appareil. Les aliments introduits dans le conduit 10 sont entaillés par l'organe de coupe 15 et contribuent à faire tourner la paroi arrière 31 de l'outil de travail rotatif 6 par rapport aux crochets 45 de l'organe entraîneur 8, tel que représenté sur la figure 11. L'outil de travail rotatif 6 est ainsi maintenu sur l'organe entraîneur 8 bien que l'axe de rotation 14 de l'organe entraîneur 8 soit incliné vers le bas en direction de l'ouverture frontale 5 du logement 4 du boîtier d'accessoire 3.

Pour retirer l'outil de travail rotatif 6, l'utilisateur peut pivoter le boîtier d'accessoire 3 par rapport à la base motorisée 1, notamment lorsqu'un morceau d'aliment engagé dans le conduit 10 entrave la rotation de l'outil de travail rotatif 6 par rapport au boîtier d'accessoire 3. Le pivotement du boîtier d'accessoire 3 par rapport à la base motorisée 1 tourne l'outil de travail rotatif 6 par rapport à l'organe entraîneur 8. La surface postérieure d'appui 49 inclinée vers l'avant en direction de l'ouverture frontale 5 par rapport au sens de rotation de l'organe entraîneur 8 vient en contact avec la paroi d'appui de l'outil de travail rotatif 6 et dégage l'outil de travail rotatif 6 de de l'organe entraîneur 8. En alternative, l'utilisateur peut tourner l'outil de travail rotatif 6 dans le logement 4 selon le sens de rotation opposé au sens d'entraînement de l'organe entraîneur 8. La surface postérieure d'appui 49 vient également en contact avec la paroi d'appui de désengagement 50 de l'outil de travail rotatif 6 et dégage également l'outil de travail rotatif 6 de l'organe entraîneur 8. Le retrait de l'outil de travail rotatif 6 du logement 4 est facilité.

A titre de variante, la surface postérieure d'appui 49 inclinée vers l'avant de l'organe entraîneur 8 peut être mise en oeuvre indépendemment de la butée de retenue 43 associée à l'organe entraîneur 8 monté dans le logement 4 selon un axe de rotation 14 incliné vers le bas en direction de l'ouverture frontale 5, et vice-versa. La surface postérieure d'appui 49 inclinée vers l'avant de l'organe entraîneur 8 est de préférence associée à un outil de travail rotatif 6 comportant une paroi latérale circonférentielle 30 présentant une partie inférieure inclinée vers le bas en direction de l'ouverture frontale 5, pour faciliter l'évacuation des aliments découpés.

A titre de variante, l'outil de travail rotatif 6 ne comporte pas nécessairement une collerette 42 prévue pour venir en appui sur la surface inférieure du logement 4. L'outil de travail rotatif 6 pourrait notamment comporter plusieurs portions de collerette discontinues prévues pour venir en appui sur la surface inférieure du logement 4 ou encore une série de nervures périphériques prévues pour venir en appui sur la surface inférieure du logement 4.

A titre de variante, l'outil de travail rotatif 6 n'est pas nécessairement tronconique, mais peut notamment être cylindrique.

A titre de variante, la surface postérieure d'appui 49 peut être ménagée sur une nervure distincte du crochet 45.

A titre de variante, le boîtier d'accessoire 3 n'est pas nécessairement assemblé avec la base motorisée 1 au moyen de baïonnettes. Le boîtier d'accessoire 3 peut par exemple être assemblé avec la base motorisée 1 par vissage. De préférence, le boîtier d'accessoire 3 est amovible par rapport à la base motorisée 1.

A titre de variante, le nombre de branches 49 de l'organe d'entraînement 32 peut être supérieur au nombre de bras 48 de l'organe entraîneur 8.

A titre de variante, l'organe d'entraînement 32 de l'outil de travail rotatif 6 n'est pas nécessairement formé par une ouverture traversant la paroi arrière 31 de l'outil de travail rotatif 6.

A titre de variante, tous les bras 48 ne sont pas nécessairement pourvus de crochets 45.

A titre de variante, l'inclinaison de l'axe de rotation 14 n'est pas nécessairement de 8° vers le bas par rapport au plan d'appui de la base motorisée 1, mais peut notamment être compris entre 0 et 20° vers le bas par rapport au plan d'appui de la base motorisée 1, et de préférence entre 2° et 15° vers le bas par rapport au plan d'appui de la base motorisée 1 lorsque l'organe entraîneur 8 est susceptible de venir en appui dans une partie inférieure du logement 4 contre la butée de retenue 43.

La présente invention n'est nullement limitée à l'exemple de réalisation décrit, mais englobe de nombreuses modifications dans le cadre des revendications.

## Revendications

1. Appareil électroménager de découpe d'aliments comprenant une base motorisée (1) et un accessoire de travail (2) solidaire de la base motorisée (1), l'accessoire de travail (2) comportant un boîtier d'accessoire (3) définissant un logement (4) présentant une ouverture frontale (5), un organe entraîneur (8) monté dans le logement (4) selon un axe de rotation (14) incliné vers le bas en direction de l'ouverture frontale (5), et un outil de travail rotatif (6) prévu pour venir en prise avec l'organe entraîneur (8) lorsque ledit outil de travail rotatif (6) est mis en place dans le logement (4), le boîtier d'accessoire (3) présentant un conduit (10) débouchant dans le logement (4) en regard d'au moins un organe de coupe (15, 15') de l'outil de travail rotatif (6), **caractérisé en ce que** l'organe entraîneur (8) forme au moins un crochet (45) orienté vers l'avant par rapport au sens de rotation de l'organe entraîneur (8), **en ce que** l'organe entraîneur (8) comporte au moins un bras (48) présentant une surface postérieure d'appui (49) inclinée vers l'avant en direction de l'ouverture frontale (5) par rapport au sens de rotation de l'organe entraîneur (8), la surface postérieure d'appui (49) étant prévue pour venir en contact avec une paroi d'appui de désengagement (50) de l'outil de travail rotatif (6), **en ce que** le boîtier d'accessoire (3) est assemblé par rotation avec la base motorisée (1), et **en ce que** le sens de rotation de l'outil de travail rotatif (6) par rapport à l'organe entraîneur (8) pour engager l'outil de travail rotatif (6) avec le crochet (45) correspond au sens de rotation du boîtier d'accessoire (3) par rapport à la base motorisée (1) pour solidariser le boîtier d'accessoire (3) avec la base motorisée (1).

2. Appareil électroménager de découpe d'aliments selon la revendication 1, **caractérisé en ce que** la surface postérieure d'appui (49) appartient au crochet (45).

3. Appareil électroménager de découpe d'aliments selon l'une des revendications 1 ou 2, **caractérisé en ce que** le boîtier d'accessoire (3) est assemblé par baïonnette avec la base motorisée (1).

4. Appareil électroménager de découpe d'aliments selon l'une des revendications 1 à 3, **caractérisé en ce que** l'outil de travail rotatif (6) est tronconique.

5. Appareil électroménager de découpe d'aliments selon l'une des revendications 1 à 4, **caractérisé en ce que** l'organe de coupe (15, 15') est solidaire d'un corps (36) réalisé en matière plastique.

6. Appareil électroménager de découpe d'aliments selon la revendication 5, **caractérisé en ce que** le corps (36) présente un organe d'entraînement (32) prévu pour venir en prise avec l'organe entraîneur (8).

7. Appareil électroménager de découpe d'aliments selon l'une des revendications 1 à 6, **caractérisé en ce que** l'organe entraîneur (8) forme entre deux et huit crochets (45), et de préférence entre trois et six crochets (45).

## Patentansprüche

1. Elektrohaushaltsgerät zum Schneiden von Lebensmitteln, umfassend eine motorisierte Basis (1) und ein Arbeitszubehör (2), das mit der motorisierten Basis (1) fest verbunden ist, wobei das Arbeitszubehör (2) ein Zubehörgehäuse (3), das eine Aufnahme (4) definiert, die eine Frontöffnung (5) aufweist, ein Antriebsorgan (8), das in der Aufnahme (4) gemäß einer Rotationsachse (14) befestigt ist, die nach unten in Richtung Frontöffnung (5) geneigt ist, und ein drehendes Arbeitswerkzeug (6) umfasst, das zum Eingriff mit dem Antriebsorgan (8) vorgesehen ist, wenn das drehende Arbeitswerkzeug (6) in die Aufnahme (4) eingesetzt wird, wobei das Zubehörgehäuse (3) einen Schacht (10) aufweist, der in die Aufnahme (4) gegenüber von wenigstens einem Schneidorgan (15, 15') des drehenden Arbeitswerkzeuges (6) mündet, **dadurch gekennzeichnet, dass** das Antriebsorgan (8) wenigstens einen Haken (45) ausbildet, der nach vorne in Bezug auf die Drehrichtung des Antriebsorgans (8) ausgerichtet ist, dadurch, dass das Antriebsorgan (8) wenigstens einen Arm (48) umfasst, der eine hintere Auflagefläche (49) aufweist, die nach vorne in Richtung Frontöffnung (5) in Bezug auf die Drehrichtung des Antriebsorgans (8) geneigt ist, wobei die hintere Auflagefläche (49) vorgesehen ist, um mit einer Auflagewand zum Lösen (50) des drehenden Arbeitswerkzeuges (6) in Kontakt zu treten, dadurch, dass das Zubehörgehäuse (3) durch Drehen mit der motorisierten Basis (1) verbunden wird, und dadurch, dass die Drehrichtung des drehenden Arbeitswerkzeuges (6) in Bezug auf das Antriebsorgan (8) zum Befestigen des drehenden Arbeitswerkzeuges (6) mit dem Haken (45) der Drehrichtung des Zubehörgehäuses (3) in Bezug auf die motorisierte Basis (1) entspricht, um das Zubehörgehäuse (3) mit der motorisierten Basis (1) fest zu verbinden.

2. Elektrohaushaltsgerät zum Schneiden von Lebensmitteln nach Anspruch 1, **dadurch gekennzeichnet, dass** die hintere Auflagefläche (49) zum Haken (45) gehört.

3. Elektrohaushaltsgerät zum Schneiden von Lebensmitteln nach einem der Ansprüche 1 oder 2, **dadurch gekennzeichnet, dass** das Zubehörgehäuse (3) mittels Bajonettverschluss mit der motorisierten Basis (1) verbunden wird.

4. Elektrohaushaltsgerät zum Schneiden von Lebensmitteln nach einem der Ansprüche 1 bis 3, **dadurch gekennzeichnet, dass** das drehende Arbeitswerkzeug (6) kegelstumpfförmig ist.

5. Elektrohaushaltsgerät zum Schneiden von Lebensmitteln nach einem der Ansprüche 1 bis 4, **dadurch gekennzeichnet, dass** das Schneidorgan (15, 15') fest mit einem Körper (36) verbunden ist, der aus Kunststoff hergestellt ist.

6. Elektrohaushaltsgerät zum Schneiden von Lebensmitteln nach Anspruch 5, **dadurch gekennzeichnet, dass** der Körper (36) ein Antriebselement (32) aufweist, das zum Eingriff mit dem Antriebsorgan (8) vorgesehen ist.

7. Elektrohaushaltsgerät zum Schneiden von Lebensmitteln nach einem der Ansprüche 1 bis 6, **dadurch gekennzeichnet, dass** das Antriebsorgan (8) zwischen zwei und acht Haken (45), und vorzugsweise zwischen drei und sechs Haken (45), ausbildet.

## Claims

1. A household appliance for cutting food comprising a power base (1) and a working attachment (2) integral with the power base (1), the working attachment (2) comprising an attachment unit (3) defining a housing (4) having a front opening (5), a driving member (8) mounted in the housing (4) about an axis of rotation (14) inclined downward towards the front opening (5), and a rotary working tool (6) adapted to engage with the driving member (8) when said rotary working tool (6) is placed in the housing (4), the attachment unit (3) having a conduit (10) opening into the housing (4) facing at least one cutting member (15, 15') of the rotary working tool (6), **characterised in that** the driving member (8) forms at least one hook (45) towards the front with respect to the direction of rotation of the driving member (8), **in that** the driving member (8) comprises at least one arm (48) having a posterior support surface (49) inclined forward towards the front opening (5) with respect to the direction of rotation of the driving member (8), the posterior support surface (49) being designed to come into contact with a support wall of disengagement (50) of the rotary working tool (6), **in that** the attachment unit (3) is assembled with the power base (1) by rotation, and **in that** the direction of rotation of the rotary working tool (6) with respect to the driving member (8) to engage the rotary working tool (6) with the hook (45) corresponds to the direction of rotation of the attachment unit (3) with respect to the power base (1) for securing the attachment unit (3) with the power base (1).

2. A household appliance for cutting food according to claim 1, **characterised in that** the posterior support surface (49) belongs to the hook (45).

3. A household appliance for cutting food according to one of claims 1 or 2, **characterised in that** the attachment unit (3) is assembled with the power base (1) by bayonets.

4. A household appliance for cutting food according to one of claims 1 to 3, **characterised in that** the rotary working tool (6) is frustoconical.

5. A household appliance for cutting food according to one of claims 1 to 4, **characterised in that** the cutting member (15, 15') is integral with a body (36) made of plastic.

6. A household appliance for cutting food according to claim 5, **characterised in that** the body (36) has a drive member (32) adapted to engage with the driving member (8).

7. A household appliance for cutting food according to one of claims 1 to 6, **characterised in that** the driving member (8) forms between two and eight hooks (45), preferably between three and six hooks (45).
